# DEMANDE DE BREVET EUROPEEN

(11) **EP 1 614 999 A2**
(43) Date de publication de la demande: **11.01.2006**
(21) Numéro de dépôt: 05300515.3
(22) Date de dépôt: 27.06.2005
(51) Int. Cl.: G01D 21/02, B60R 1/02

(54) **Systeme et procede de commande automatique de positionnement d'un element de detection de l'environnement, embarque a bord d'un vehicule automobile**

(30) Priorité: 05.07.2004 FR 0407437
(71) Demandeur: Renault SAS, 92100 Boulogne Billancourt (FR)
(72) Inventeur: CAPPERON, Stéphane, 92500, RUEIL MALMAISON (FR); WAKIM, Christophe, 75007, PARIS (FR)

(57) **Abrégé**

Système de commande automatique de positionnement d'un élément de détection de l'environnement (DET_ENV), embarqué à bord d'un véhicule automobile (15) qui comprend une unité de commande électronique (6). Le système comprend des moyens de commande (4) de positionnement dudit élément de détection d'environnement (DET_ENV), des capteurs ou des moyens d'estimations (1, 2, 3) fournissant auxdits moyens de commande (4) des informations d'angles comprenant au moins un angle de lacet, un angle de roulis, et/ou un angle de tangage, lesdits moyens de commande comprenant des moyens de correction (5) d'angles de lacet, de roulis, et/ou de tangage (α, γ, β) dudit élément de détection d'environnement (DET_ENV), et des moyens de modification de positionnement (MOD-POS) dudit élément de détection d'environnement (DET_ENV) à partir desdites corrections d'angles (α, γ, β).

## Description

La présente invention concerne un système et un procédé de commande automatique de positionnement d'un élément de détection de l'environnement, embarqué à bord d'un véhicule automobile.

La détection de l'environnement de conduite est utile pour la sécurité des occupants d'un véhicule automobile. On entend par élément de détection de l'environnement, tout capteur ou détecteur de l'environnement, par exemple, des phares, des rétroviseurs, des caméras, des radars, des lidars, et des télémètres.

Pour permettre l'ensemble des prestations de détection de l'environnement et d'aides à la conduite, plusieurs capteurs sont nécessaires, par exemple pour couvrir toute la zone à surveiller. Il est parfois nécessaire de prévoir plusieurs capteurs identiques pour assurer une même prestation. Cela a un coût élevé.

Pour diminuer ces coûts, tout en gardant la même zone de couverture efficace, il existe des systèmes, notamment pour des éclairages, des rétroviseurs ou des caméras, qui ajustent un angle de vue en fonction d'un angle de lacet.

Par exemple, le document EP-A-1 327 560 (Exon Science) décrit un dispositif de commande pour ajuster automatiquement un angle de vue d'un rétroviseur ou d'une caméra CCD lorsque le véhicule est en train de virer. De tels dispositifs ne tiennent compte que d'un angle de lacet, qui n'est déterminé qu'à partir d'un angle de rotation du volant. Cette modification du positionnement du dispositif de détection de l'environnement ne tient compte que d'un angle de lacet, évalué de manière imprécise.

Or le véhicule subit également des écarts d'angles de roulis et de tangage. On entend par angle de lacet, un angle de rotation du véhicule autour de son centre de gravité, par angle de roulis, un angle d'inclinaison latérale du véhicule dans le sens de la largeur du véhicule, et par angle de tangage, un angle de basculement dans le sens longitudinal du véhicule.

L'invention a donc notamment pour but, au vu de ce qui précède, d'améliorer le positionnement d'éléments de détection de l'environnement embarqués sur un véhicule.

Selon un aspect de l'invention, il est proposé un système de commande automatique de positionnement d'un élément de détection de l'environnement, embarqué à bord d'un véhicule automobile, et comprenant une unité de commande électronique. Le système comprend des moyens de commande de positionnement dudit élément de détection de l'environnement, des capteurs ou des moyens d'estimations fournissant aux moyens de commande des informations d'angles comprenant au moins un angle de lacet, un angle de roulis, et/ou un angle de tangage, lesdits moyens de commande comprenant des moyens de correction d'angles de lacet, de roulis, et/ou de tangage de l'élément de détection de l'environnement, et des moyens de modification de positionnement de l'élément de détection de l'environnement à partir desdites corrections d'angles.

Grâce à ces moyens, la position de l'élément de détection de l'environnement est améliorée, et tient compte de ces trois valeurs d'angles dépendant des conditions de roulage du véhicule. Ces angles peuvent être mesurés par des capteurs inertiels et/ou des capteurs de niveau à bulle.

Dans un mode de réalisation préféré, le système comprend, en outre, au moins un élément de détection de l'environnement fournissant des informations d'environnement aux moyens de commande pour améliorer la détermination des corrections d'angles.

Dans un mode de réalisation avantageux, le système comprend, en outre, des moyens d'anticipation fournissant des informations d'anticipation aux moyens de correction pour améliorer les corrections d'angles et diminuer le temps de réaction du positionnement de l'élément de détection de l'environnement.

Ces informations fournies comprennent par exemple une position angulaire du volant, la position de la pédale d'accélération, la position de la pédale de frein, ou la position GPS du véhicule

En outre, l'élément de détection de l'environnement comprenant au moins un paramètre de fonctionnement modifiable, lesdits moyens de commande comprennent des moyens de modification d'au moins un paramètre de fonctionnement modifiable dudit élément de détection de l'environnement à partir d'informations reçues par lesdits moyens de commande.

C'est le cas de la mise au point d'une caméra.

Selon un autre aspect de l'invention, il est proposé un procédé de commande automatique de positionnement d'un élément de détection de l'environnement, embarqué à bord d'un véhicule automobile. On commande une modification du positionnement de l'élément de détection de l'environnement en fonction de corrections d'angles de lacet, de roulis, et/ou de tangage.

Dans un mode de mise en oeuvre préféré, on reçoit des informations d'angles comprenant au moins un angle de lacet, un angle de roulis, et/ou un angle de tangage.

Dans un mode de mise en oeuvre avantageux, on reçoit, en outre, des informations d'environnement permettant d'améliorer la détermination desdites corrections d'angles.

Avantageusement, on reçoit, en outre, des informations d'anticipation permettant d'améliorer lesdites corrections d'angles et de diminuer le temps de réaction du positionnement dudit élément de détection de l'environnement.

En outre, les informations d'anticipation peuvent être un sous-ensemble d'un ensemble comprenant la vitesse du véhicule, l'accélération du véhicule, des informations d'un dispositif de navigation et de géolocalisation, éventuellement traitées, la position angulaire du volant, la position de la pédale d'accélération, et la position de la pédale de frein.

Par exemple, l'élément de détection de l'environnement comprenant au moins un paramètre de fonctionnement modifiable, on modifie au moins un paramètre de fonctionnement modifiable de l'élément de détection de l'environnement, à partir d'informations reçues.

Un paramètre de fonctionnement réglable peut être une zone de détection réglable dudit élément de détection de l'environnement.

D'autres buts, caractéristiques et avantages de l'invention apparaîtront à la lecture de la description suivante, donnée uniquement à titre d'exemple nullement limitatif, et faite en référence aux dessins annexés, sur lesquels :
- La figure 1 illustre un système selon l'invention.
- la figure 2 est un premier schéma synoptique illustrant l'invention ;
- la figure 3 est un second schéma synoptique illustrant l'invention ;
- la figure 4 est un troisième schéma synoptique illustrant l'invention
- la figure 5 est un schéma synoptique illustrant les principales étapes d'un procédé selon l'invention.

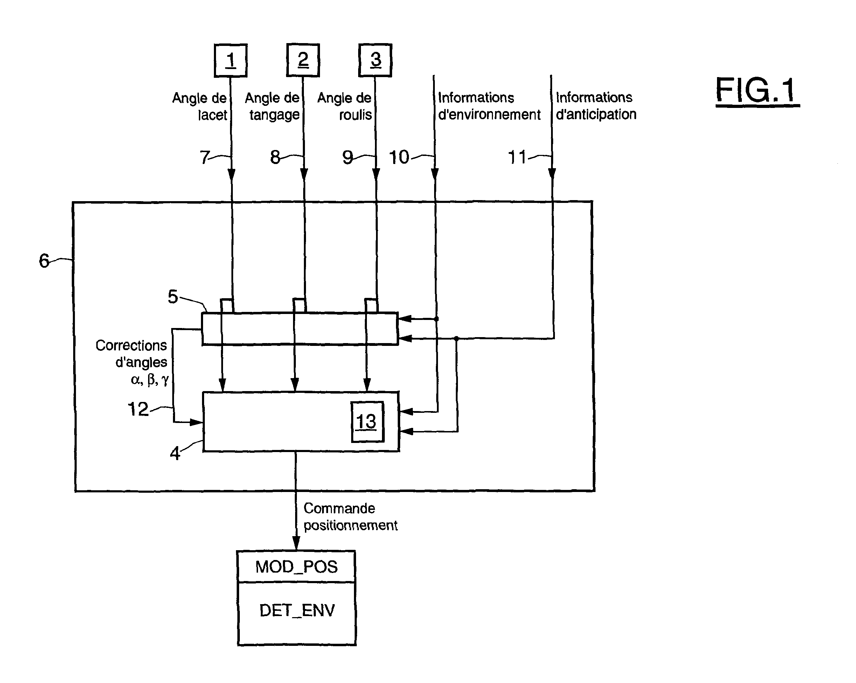

Sur la figure 1, des capteurs ou moyens d'estimations 1, 2, 3 fournissent respectivement, un angle de lacet, un angle de tangage et un angle de roulis du véhicule, à des moyens de commande 4 de positionnement d'un moyen de détection de l'environnement DET_ENV et à des moyens de correction d'angles 5 de l'unité de commande électronique 6, par des connexions respectives 7, 8, 9.

Un élément de détection de l'environnement fournit des informations d'environnement aux moyens de commande 4 et aux moyens de corrections d'angles 5 par une connexion 10. Les moyens de commande 4 et les moyens de corrections d'angles 5 reçoivent également des informations d'anticipations par une connexion 11. Ces informations d'environnement et de d'anticipation sont optionnelles.

Les moyens de correction d'angles 5 transmettent les corrections α, β, γ des angles de lacet, de tangage et de roulis aux moyens de commande 4 par une connexion 12.

Les moyens de commande 4 comprennent en outre, par exemple, des moyens de modification 13 d'un paramètre de fonctionnement modifiable de l'élément de détection de l'environnement DET_ENV, car dans cet exemple, l'élément de détection de l'environnement DET_ENV comprend un paramètre de fonctionnement modifiable.

Les moyens de commande 4 du positionnement de l'élément de détection de l'environnement DET_ENV commandent le positionnement dudit élément par l'intermédiaire d'une connexion 14 et de moyens de modification du positionnement MOD_POS de l'élément de détection de l'environnement DET_ENV.

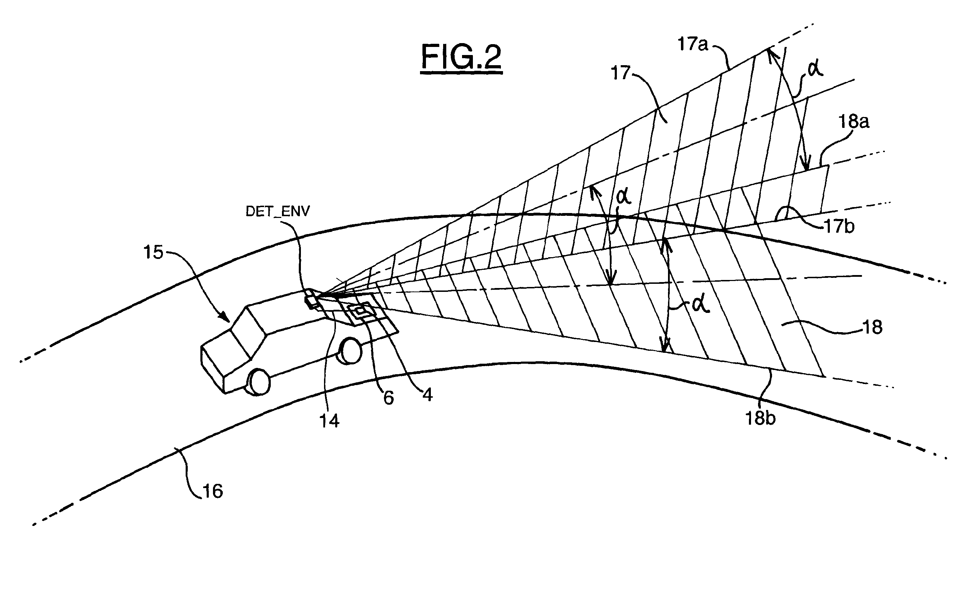

Sur la figure 2, on a représenté un véhicule automobile 15 roulant sur une route 16, équipé d'un élément de détection de l'environnement DET_ENV, par exemple un radar, qui permet de détecter des obstacles, comme un autre véhicule précédant le véhicule 15. Dans la suite de la description, on considèrera que l'élément de détection de l'environnement DET_ENV est un radar, mais cet exemple n'est nullement limitatif. Sur la figure 2, on voit que, dans un virage, le radar DET_ENV ne peut pas détecter d'obstacles situés devant le véhicule 15 sur la route 16 car son positionnement actuel correspond à celui d'une portion de route quasiment rectiligne.

La zone de détection 17 du radar DET_ENV est alors trop écartée de la portion de route courbe située devant le véhicule 15, pour pouvoir détecter un obstacle éventuel situé dans cette courbe. La zone de détection 17 est délimitée dans cette direction par les délimitations 17a et 17b. Le véhicule 1 est équipé d'un système tel qu'illustré par la figure 1.

Le système détermine alors un décalage nécessaire de la zone de détection 17 du radar DET_ENV d'un angle α, appelé correction d'angle de lacet, pour tenir compte du virage ou lacet de la route 16, afin d'obtenir une nouvelle zone de détection 18 tenant compte de la courbure à venir de la route. La zone de détection 18 est délimitée dans cette direction par les délimitations 18a et 18b.

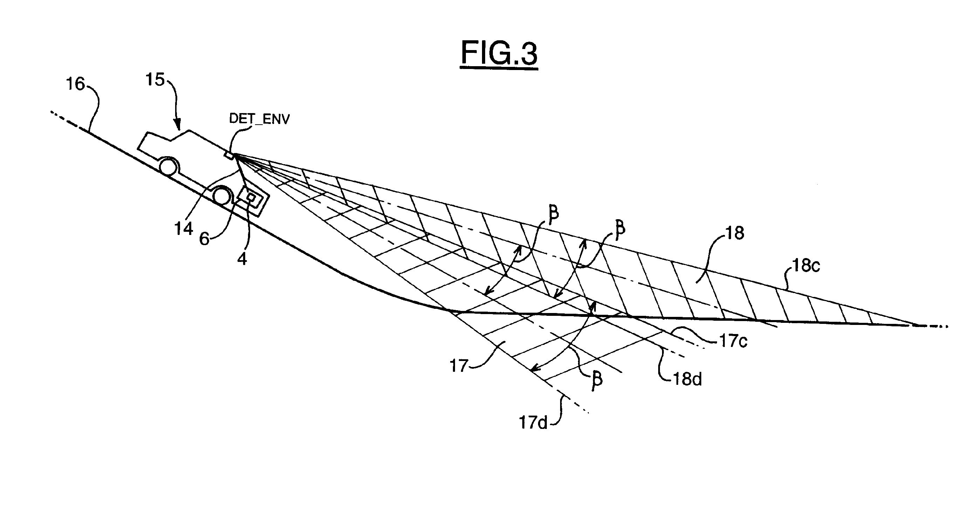

L'invention tient également compte de la déclivité de la route sur laquelle le véhicule est engagé. En effet, la portion de route 16 sur laquelle se trouve le véhicule 1, peut être inclinée, comme illustré sur la figure 3, c'est-à-dire en pente. Dans ce cas, le véhicule subit également un tangage, et la zone de détection 17 du radar DET_ENV peut être mauvaise, c'est-à-dire trop haute ou trop basse. La zone de détection 17 est délimitée selon cette direction par les délimitations 17c et 17d. La figure 3 illustre un cas dans lequel la zone de détection est trop basse, car la descente entraîne un tangage de la voiture, et le système détermine alors un décalage de la zone de détection 17 du radar DET_ENV d'un angle β, appelé correction d'angle de tangage, pour tenir compte de la pente de la portion de route 16 située devant le véhicule 15, et obtenir une nouvelle zone de détection 18. La zone de détection 18 est délimitée dans cette direction par les délimitations 18c et 18d.

De plus, le véhicule 1 peut subir un roulis, ou inclinaison latérale. Le système décale alors la zone de détection du radar d'un angle γ, appelé correction d'angle de roulis.

Ce sont les moyens de correction 5 qui déterminent les corrections d'angles de lacet, de roulis, et de tangage α, β et γ, pour le radar DET_ENV, et les moyens de commande 4 agissent en conséquence sur des actionneurs pour modifier le positionnement du radar DET_ENV, afin qu'il ait une nouvelle zone de détection 18 telle que déterminée.

Dans cet exemple, les moyens de correction d'angles 5 recevant des informations d'anticipation améliorent les corrections d'angles, ce qui permet de diminuer le temps de réaction du positionnement du radar DET_ENV.

Les informations d'anticipation peuvent être un sous-ensemble d'un ensemble comprenant la vitesse du véhicule, l'accélération du véhicule, des informations d'un dispositif de navigation et de géolocalisation, éventuellement traitées, la position angulaire du volant, la position de la pédale d'accélération, et la position de la pédale de frein.

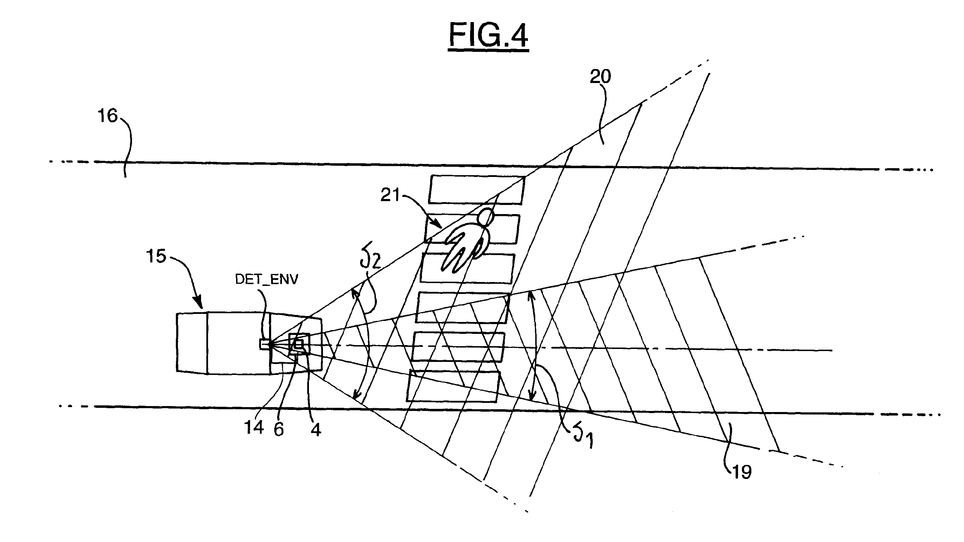

La figure 4 illustre le cas où l'élément de détection d'environnement DET_ENV, ici un radar, comprend un paramètre de détection modifiable, par exemple la largeur angulaire de la zone de détection. Ce paramètre peut être modifié par les moyens de modification 13 des moyens de commande 4, en fonction des informations reçues par les moyens de commande 4. Par exemple, s'il reçoit comme information la vitesse du véhicule 15, les moyens de modification 13 commandent la largeur angulaire de la zone de détection en fonction de la vitesse du véhicule 15.

En effet, lorsque le véhicule 15 est sur une route à grande circulation, il a de fortes probabilités de rouler vite, et il est alors important de détecter d'éventuels obstacles éloignés du véhicule 15. Les moyens de modification 13 commandent alors une faible largeur angulaire δ₁ de la zone de détection 19 du radar DET_ENV, représentée sur la figure 4.

En revanche, lorsque le véhicule 15 roule en zone habitée, il a de fortes probabilités de rouler lentement, voire d'être à l'arrêt. Il est alors important de détecter d'éventuels obstacles proches du véhicule 15. Les moyens de modification 13 commandent alors une importante largeur angulaire δ₂ de la zone de détection 20 du radar DET_ENV, représentée sur la figure 4. Dans cet exemple, le fait d'avoir une importante largeur angulaire δ₂ de la zone de détection 20 du radar DET_ENV lorsque le véhicule roule lentement, ou est à l'arrêt, permet, par exemple, de détecter la présence d'un piéton 21, situé comme représenté sur la figure 4, et qui ne serait pas détecté par le radar DET_ENV si les moyens de commande 4 laissaient une faible largeur angulaire δ₁ de la zone de détection 19 du radar DET_ENV.

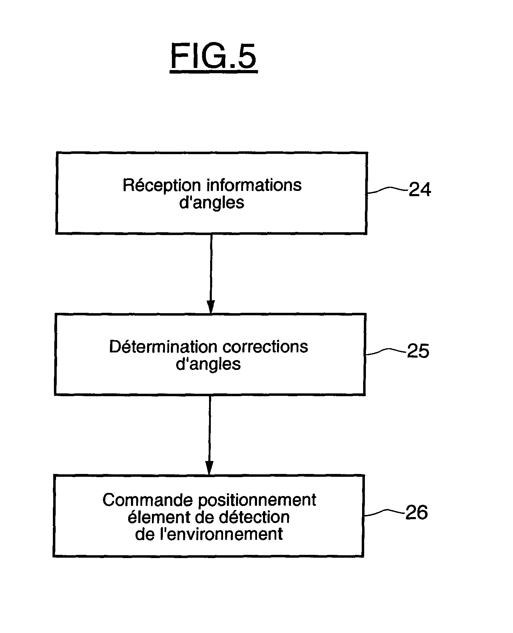

La figure 5 illustre un procédé selon l'invention, dans lequel, lors d'une étape 24, l'unité de commande électronique 6 reçoit des informations d'angles comprenant un angle de lacet, un angle de roulis, et un angle de tangage, à partir de données fournies par des capteurs ou des moyens d'estimations. Ensuite, lors d'une étape 25, les moyens de correction 5 déterminent des corrections α, γ, β, d'angles de lacet de roulis et de tangage pour ledit élément de détection de l'environnement DET_ENV. Enfin, lors d'une étape 26, les moyens de commande 4 commandent une modification du positionnement dudit élément de détection de l'environnement DET_ENV par les moyens de modification du positionnement MOD_POS en fonction de ladite détermination (étape 25) desdites corrections α, γ, β d'angles de lacet de roulis et de tangage.

L'invention permet donc d'améliorer le positionnement d'un élément de détection embarqué sur un véhicule automobile, afin d'améliorer nettement leur efficacité.

L'invention permet en outre de diminuer le nombre de capteurs d'un élément de détection de l'environnement.

## Revendications

1. Système de commande automatique de positionnement d'un élément de détection de l'environnement (DET_ENV), embarqué à bord d'un véhicule automobile (15), comprenant une unité de commande électronique (6), **caractérisé en ce qu'**il comprend des moyens de commande (4) de positionnement dudit élément de détection de l'environnement (DET_ENV), des capteurs ou des moyens d'estimations (1, 2, 3) fournissant auxdits moyens de commande (4) des informations d'angles comprenant au moins un angle de lacet, un angle de roulis, et un angle de tangage, lesdits moyens de commande (4) comprenant des moyens de correction (5) d'angles de lacet, de roulis, et de tangage (α, γ, β) dudit élément de détection d'environnement (DET_ENV), et des moyens de modification de positionnement (MOD_POS) dudit élément de détection d'environnement (DET_ENV) à partir desdites corrections d'angles (α, γ, β).

2. Système selon la revendication 1, **caractérisé en ce qu'**il comprend, en outre, au moins un élément de détection de l'environnement fournissant des informations d'environnement (10) auxdits moyens de commande pour améliorer la détermination desdites corrections d'angles (α,γ, β).

3. Système selon la revendication 1 ou 2, **caractérisé en ce que** le système comprend, en outre, des moyens d'anticipation fournissant des informations d'anticipation (11) auxdits moyens de correction (5) pour améliorer lesdites corrections d'angles (α, γ, β) et diminuer le temps de réaction du positionnement dudit élément de détection de l'environnement (DET_ENV).

4. Système selon la revendication 3, **caractérisé en ce que**, ledit élément de détection de l'environnement (DET_ENV) comprenant au moins un paramètre de fonctionnement modifiable, lesdits moyens de commande (4) comprennent, en outre, des moyens de modification (13) d'au moins un paramètre de fonctionnement modifiable dudit élément de détection de l'environnement (DET_ENV) à partir d'informations reçues par lesdits moyens de commande (4).

5. Procédé de commande automatique de positionnement d'un élément de détection de l'environnement (DET_ENV), embarqué à bord d'un véhicule automobile (15), **caractérisé en ce que** l'on commande une modification du positionnement dudit élément de détection de l'environnement (DET_ENV) en fonction de corrections d'angles de lacet, de roulis, et de tangage (α, γ, β).

6. Procédé selon la revendication 5, **caractérisé en ce que** l'on reçoit, en outre, des informations d'angles comprenant au moins un angle de lacet, un angle de roulis, et un angle de tangage.

7. Procédé selon la revendication 5 ou 6, **caractérisé en ce que** l'on reçoit, en outre, des informations d'environnement permettant d'améliorer la détermination desdites corrections d'angles (α, γ, β).

8. Procédé selon l'une quelconque des revendications 5 à 7, **caractérisé en ce que** l'on reçoit, en outre, des informations d'anticipation (11) permettant d'améliorer lesdites corrections d'angles (α, γ, β) et de diminuer le temps de réaction du positionnement dudit élément de détection de l'environnement (DET_ENV).

9. Procédé selon la revendication 8, **caractérisé en ce que** lesdites informations d'anticipation peuvent être un sous-ensemble d'un ensemble comprenant la vitesse du véhicule, l'accélération du véhicule, des informations d'un dispositif de navigation et de géolocalisation, éventuellement traitées, la position angulaire du volant, la position de la pédale d'accélération, et la position de la pédale de frein.

10. Procédé selon la revendication 9, **caractérisé en ce qu'**en outre, ledit élément de détection de l'environnement (DET_ENV) comprenant au moins un paramètre de fonctionnement modifiable, on modifie au moins un paramètre de fonctionnement modifiable dudit élément de détection de l'environnement (DET_ENV), à partir d'informations reçues.

11. Procédé selon la revendication 10, **caractérisé en ce qu'**un paramètre de fonctionnement réglable est une zone de détection réglable dudit élément de détection de l'environnement (DET_ENV).
